# EUROPEAN PATENT SPECIFICATION

(11) **EP 2 390 402 B1**
(45) Date of publication and mention of the grant of the patent: **14.06.2017**
(21) Application number: 10729301.1
(22) Date of filing: 06.01.2010
(51) Int. Cl.: D06F 37/28, D06F 37/26

(54) **WASHING MACHINE**
WASCHMASCHINE
MACHINE À LAVER

(30) Priority: 07.01.2009 KR 20090001057
(43) Date of publication of application: 30.11.2011
(73) Proprietor: LG Electronics Inc., Seoul, 07336 (KR)
(72) Inventor: JO, Min Gyu, Seoul 153-802 (KR); SEO, Hyun Seok, Seoul 153-802 (KR)
(74) Representative: Ter Meer Steinmeister & Partner
(86) International application number: PCT/KR2010/000077
(87) International publication number: WO 2010/079959

(56) References cited:
- EP-A1- 0 655 523
- EP-A1- 2 078 777
- EP-A2- 1 985 741
- DE-A1-102007 009 509
- US-A1- 2005 262 885
- US-B1- 6 241 782

## Description

### [Technical Field]

The present invention relates to a washing device.

### [Background Art]

In general, a drum type washing machine has a tub mounted in a cabinet which forms an exterior of the washing machine for accommodating washing water. Inside of the tub, there is a drum rotatably mounted in the tub for receiving laundry. Since the drum is rotated by a motor, and vibration of the drum is transmitted to the tub, springs, dampers, and balancers are provided to the washing machine for attenuating the vibration.

The tub is suspended from an inside of the cabinet with hanging springs, and the motor is mounted to a rear side of the tub for rotating the drum in the tub. That is, the motor mounted to the rear side of the tub connects the drum to the tub.

In the meantime, a related art drum type washing machine causes the vibration at the drum due to unbalance of weight of the laundry leaned to one side when the drum rotates at a high speed. As the vibration transmits from the drum to the tub, the tub also vibrates.

Consequently, in order to prevent the tub from hitting the cabinet due to vibration of the tub, an adequate gap between an outside circumferential surface of the tub and the cabinet is required. Therefore, as far as a size of the cabinet is not increased, a volume of the tub can not be increased. It is a recent trend that the consumers prefer a larger capacity of washing for the same size of cabinet. To meet such a user demand, a fixed tub type washing machine has been developed having a structure in which the tub is connected to the cabinet directly and the vibration does not transmit from the drum to the tub for increasing an effective volume.

DE 10 2007 009509 A1 relates to a guard device comprising wedge-shaped guard elements, a flat progression on the side facing away from a base side in the direction of a first end and a steep progression on the side facing away from the base side in the direction of a second end which lies opposite the first end.

### [Disclosure]

### [Technical Problem]

To solve the problems, an object of the present invention is to provide a washing machine which can compensate a sagged portion of a drum for preventing a portion between a tub and the drum from exposing in a state the drum holds laundry. The objects are solved by the features of the independent claim.

### [Technical Solution]

According to one example, a washing machine includes a tub for accommodating washing water, the tub having a laundry opening, a drum rotatably coupled in the tub for receiving laundry, the drum having an opening matched to the laundry opening; and a gasket having a blocking portion for blocking a portion of the laundry opening of the tub, asymmetrically.

The blocking portion blocks the laundry opening asymmetrically in up/down directions.

The blocking portion is formed to block a portion of an upper side of laundry opening of the tub.

The blocking portion is formed to make an upper most side of the opening in the drum is not visible from a front side of the tub.

The blocking portion is formed in a shape of a stream line along an inside circumferential surface of an opening side of the drum.

The gasket includes a door sealing portion for sealing a door which opens/closes the laundry opening in the tub, and the blocking portion is formed extended further from the door sealing portion inwardly in a radial direction.

The gasket includes a first fastening portion for placing a circumferential surface projected forward from a front of the tub therein, and a second fastening portion to be fastened to an inside surface of the tub.

The second fastening portion includes a tub fastening portion having a plurality of grooves for placing projections or hooks formed on an inside surface of the tub therein.

The washing machine further comprise a driving unit having a rotation shaft connected to the drum, a bearing housing for supporting the rotation shaft, and a motor for rotating the rotation shaft, and a suspension unit connected to the bearing housing for damping vibration of the drum.

The washing machine further comprise a driving unit having a rotation shaft connected to the drum, a bearing housing for supporting the rotation shaft, and a motor for rotating the rotation shaft, and a rear gasket for sealing a rear side of the tub to prevent water from leaking from the tub to the driving unit and enabling the driving unit to make movement relative to the tub.

The washing machine further comprise a suspension unit for supporting and damping the drum, and the tub is supported rigidly more than the drum is supported by the suspension unit.

### [Advantageous Effects]

The present invention has following advantageous effects.

The washing machine of the present invention improves an esthetic appreciation of the washing machine as the washing machine can block exposure of a gap between the tub and the drum caused by sagging of the front of the drum in a state the drum holds the laundry to the maximum.

### [Description of Drawings]

The accompanying drawings, which are included to provide further understanding of the disclosure and are incorporated in and constitute a part of this application, illustrate embodiments of the disclosure and together with the description serve to explain the principle of the disclosure.

In the drawings:
FIG. 1 illustrates a section of a washing machine in accordance with a preferred embodiment of the present invention;
FIG. 2 illustrates perspective view of a door gasket mounted to the tub in FIG. 1;
FIG. 3 illustrates a perspective view of the door gasket in FIG. 2;
FIG. 4 illustrates a diagram showing a sagged state of the drum when the drum in FIG. 1 is in operation, schematically;
FIG. 5 illustrates a front view showing a relation between the door gasket and the drum in

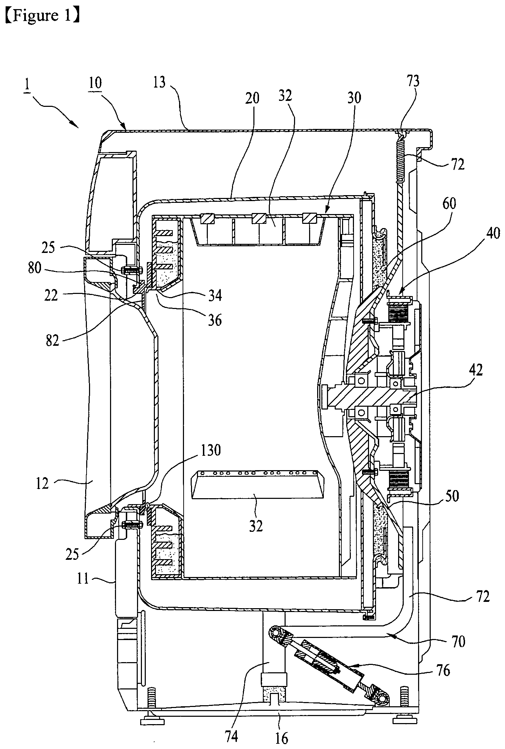

FIG. 1 in a state the drum is empty; and

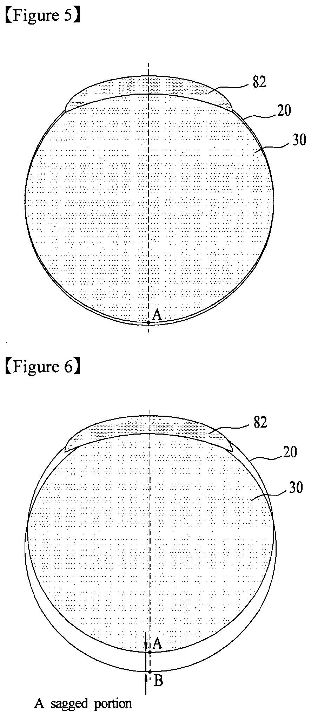

FIG. 6 illustrates a front view showing a relation between the door gasket and the drum in
FIG. 5 in a state the drum is sagged.

### [Best Mode]

Reference will now be made in detail to the specific embodiments of the present invention, examples of which are illustrated in the accompanying drawings. Wherever possible, the same reference numbers will be used throughout the drawings to refer to the same or like parts.

The present invention will be described taking a tub fixed type washing machine having a front portion of the tub directly connected to a cabinet as one embodiment of the present invention.

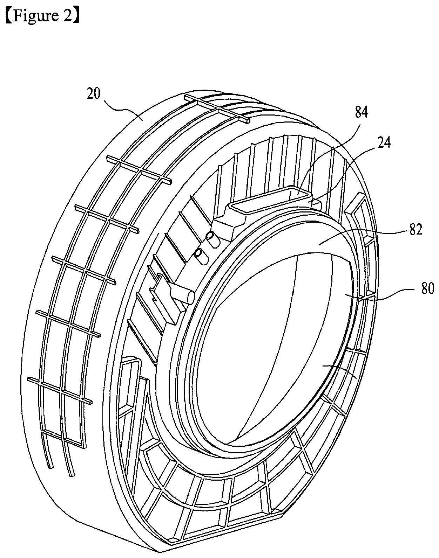

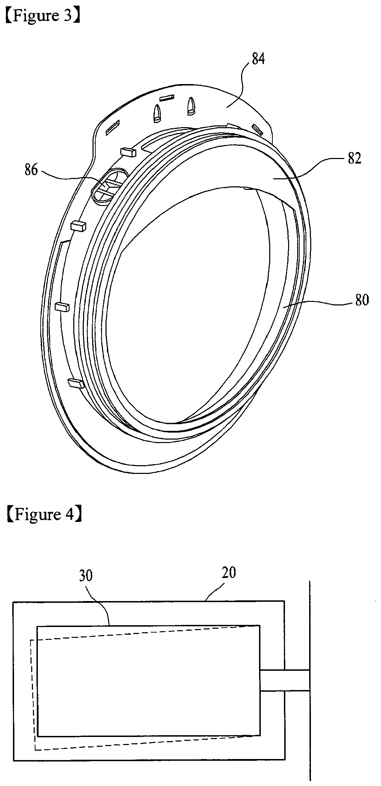

FIG. 1 illustrates a section of a washing machine in accordance with a preferred embodiment of the present invention, FIG. 2 illustrates perspective view of a door gasket mounted to the tub in FIG. 1, FIG. 3 illustrates a perspective view of the door gasket in FIG. 2. FIG. 4 illustrates a diagram showing a sagged state of the drum when the drum in FIG. 1 is in operation schematically, FIG. 5 illustrates a front view showing a relation between the door gasket and the drum in FIG. 1 in a state the drum is empty, and FIG. 6 illustrates a front view showing a relation between the door gasket and the drum in FIG. 5 in a state the drum is sagged.

Referring to FIG. 1, the washing machine 1 includes a cabinet 10 which forms an exterior of the washing machine 1, a tub 20 in the cabinet 10 directly connected thereto, a drum 30 rotatably mounted in the tub 20, a motor 40 mounted in rear of the tub 20 for rotating the drum 30, a bearing housing 28 which is a rear side of the tub 20 and supports a shaft 42 of the motor 40, damping means 50 mounted between the bearing housing 28 and the tub 20 for sealing an inside of the tub 20 and damping vibration or impact transmitting from the motor 40 to the tub 20, and a suspension assembly 60 for supporting the drum 30 and damping the vibration or impact transmitting to the bearing housing 28.

The cabinet 10 has a door 12 mounted to a front 11 thereof for opening/closing an opening for introduction of the laundry into the drum, and a base 16 fixedly secured to an underside thereof. The cabinet 10 also may have a top bracket 73 at an upper side 13 for securing an elastic member 72 for suspending the bearing housing.

The tub 20 is directly fixed to an inside of the cabinet 10. Preferably, the tub 20 and the cabinet 10 may be fixed as a side of the tub 20 facing the door 12 is fastened to an inside of the front 11 of the cabinet 10 with screws 25. Of course, a side or a rear of the tub 20 may be fastened to the cabinet 10. The tub also has a laundry opening 22 in a front matched to the opening in the cabinet 10 for introduction of the laundry to the drum 30.

The bearing housing 28 is fixedly mounted to a rear side of the tub 20. The bearing housing 28 has bearings (not shown) mounted thereto for smooth rotation of the motor shaft 42, and the motor shaft 42 is supported on the bearings.

The damping means 50 dampens the vibration or impact transmitting from the drum 30 and the motor 40 to the tub 20 at the time of washing or spinning. Therefore, it is preferable that the damping means 50 is formed of an elastic material, which contacts or relaxes against the vibration or the impact.

The motor 40 is coupled to a rear of the bearing housing 28, and the motor shaft 42 is passed through the bearing housing 28 and fixedly secured to the rear side of the drum 30.

The drum 30 is rotated by the motor shaft 42, and has lifters 32 on an inside circumferential surface for moving the laundry. The drum 30 also has a balancer 34 in a front for balancing action to suppress vibration of the drum 30 at the time of spinning (though various kinds of balancers, such as a liquid balancer or ball balance, can be used, a liquid balancer is used for the embodiment of the present invention).

In the meantime, the suspension assembly 60 includes a damper bracket 62 coupled to the bearing housing 28, and a damping unit coupled to the damper bracket 62 for supporting the bearing housing 28.

The damping unit includes a maim damper 80 for supporting weight of the drum 30 and damping vertical direction vibration, and a sub-damper 90 for damping horizontal direction vibration of the drum 30.

The drum 30 and the bearing housing 28 are lifted up and supported by the damping unit having the main damper 80 and the sub-damper 90.

Thus, since the tub 20 is directly fixed to the cabinet 10, and the vibration does not transmit from the drum 30 to the tub 20, a diameter of the tub 20 can be made greater than the related art washing machine. Eventually, the washing machine of the present invention has an effect of expanding effective volumes of the tub 20 and the drum 30.

Since the tub 20 is fixed to the cabinet 10, if the vibration or impact is transmitted to the tub 20 fixed to the cabinet 10 as one body, not only the tub 20 itself shakes, but because weight of the cabinet 10 is added, increasing rigidity of the tub 20, an effect of improving an overall vibration characteristic of the washing machine can be expected.

Moreover, since the drum 30 rotating thus is supported only on one side, the inside volume of the drum 30 can be expanded further than a type of the drum 30 which is supported on both sides. Accordingly, since a number of components can be reduced as many, improvement of productivity can be expected.

In the meantime, there is a predetermined gap between the drum 30 and the tub 20 such that the drum 30 is not brought into contact with the tub 20 when the drum 30 vibrates. However, if a foreign matter, such as a coin or a button, is placed between the tub 20 and drum 30, the foreign matter is liable to make noise as the foreign matter hits the drum 30. Therefore, it is necessary to have a structure for preventing the foreign matter from being placed between the tub 20 and the drum 30 for preventing the placement of the foreign matter and sealing between the tub 20 and the drum 30.

Referring to FIG. 4, the drum 30 is supported on the damping unit having a main damper 80 and a sub-damper 90. Therefore, if the laundry is introduced to the drum 30, the drum 30 sags down by laundry weight.

Particularly, if the drum 30 sags down when the drum 30 holds the laundry or the washing water to the maximum, the gap between a top of the tub 20 and a top of the drum 30 becomes greater, also making possibility of introduction of the foreign matter thereto greater. Moreover, the exposure of the gap between the top of the tub 20 and a top of the drum 30 to an outside of the washing machine, making parts positioned at an exposed portion visible to the user, impairs esthetic appreciation.

Therefore, the washing machine in accordance with the preferred embodiment of the present invention prevents the foreign matter from entering between the tub 20 and the drum 30. Along with this, a door gasket 80 is applied to the washing machine of the present invention for compensating the gap between the top of the drum 30 and the tub 20 in a case the drum 30 sags down by the laundry weight (the compensation used herein means blocking of the gap between the top of the drum 30 and the tub 20, will be defined as a word having the same meaning with blocking or covering, and will be used together).

Referring to FIGS. 2 and 3, the door gasket 80 is mounted along the laundry opening 22 in the tub 20 formed matched to the opening in the front of the cabinet 10. That is, an outside surface of the door gasket 80 is in close contact with an inside surface of the laundry opening 22. Therefore, it is preferable that the door gasket 80 has a adequate width such that the door gasket 80 is securely fastened to the inside surface of the laundry opening 22 of the tub 20. The door gasket 80 may have a tub fastening portion 84 for improving fastening force to the tub 20, additionally. Moreover, the door gasket 80 may have a water supply hose connection portion 86 for connection of a water supply hose (not shown) thereto, and a blocking portion 82 for compensating a sagged portion of the drum 30, additionally.

The tub fastening portion 84 is formed at a top portion of a rear of the door gasket 80 projected upward from an outside circumference of the rear in a plate shape. The tub fastening portion 84 is placed in and fastened to a gasket fastening portion (not shown) in an upper side of the tub 20with screws, or by forming a projection or a hook at least one inside surface of the tub fastening portion 84 and the tub and a recesses in the other one for placing on the projection or the hook.

The blocking portion 82 is formed at an upper portion of a front of the door gasket 80, projected downward from an inside circumference of the front in a shape of a stream line. The blocking portion 82 covers the gap between the top of the laundry opening 22 of the tub 20 and the top of the drum 30 when the drum 30 holds the laundry and the washing water to the maximum. The blocking portion may be formed such that an upper side of the opening of the drum is not visible in at least a full load state. The full load state is a state in which the laundry is introduced to the washing machine as much as a maximum capacity. In general, the washing machine has a maximum allowable laundry capacity showing to consumers. For an example, a washing machine sold as an 11kg class washing machine becomes fully loaded when 11kg of laundry is introduced thereto.

That is, referring to FIG. 4, if the drum 30 holds the laundry and the washing water more than a certain weight, the front of the drum 30 sags down. This is because the drum 30 is mounted such that the front thereof is not fastened to the tub 20, but has a degree of freedom in a state the front is spaced from the tub 20, while only the rear thereof is supported on the bearing housing 50. Therefore, if the drum 30 holds the laundry and the washing water more than a certain weight, the front of the drum 30 sags down.

In this instance, if there is no blocking portion 82 at the door gasket 80, various components, such as a water supply structure at an upper side of an inside of the tub 20 can becomes visible to the user through the gap between an upper side of the laundry opening 22 of the tub 20 and the upper side of the drum 30.

If the blocking portion 82 of the door gasket 80 compensates as much as the sagged portion of the drum 30, the gap between the top of the laundry opening of the tub 20 and the top of the drum 30 is blocked.

Preferably, the blocking portion 82 may be formed to compensate as much as an area made visible between the top of the laundry opening of the tub 20 and the top of the drum 30 as the drum 30 sags down.

Accordingly, it is preferable that the blocking portion 82 has a width the same with a distance between a lowest point A of the drum 30 when the drum 30 holds no laundry and washing water in a state the drum 30 is stationary, and the lowest point B of the drum 30 when the drum 30 holds the laundry and the washing water to the maximum in a state the drum 30 is stationary. That is, the blocking portion 82 has a width as much as the sagged portion (from B to A) of the drum 30.

Moreover, since the blocking portion 82 is formed such that the gap between the laundry opening 22 of the tub 20 and the blocking portion 82 has the shape of a stream line at the time the drum 30 is at the lowest point B, it is preferable that the blocking portion 82 is formed such that the blocking portion 82 is projected down from the inside circumference of the upper side of the door gasket 80, with an edge thereof directing the drum 30 forms a stream line along an outside circumference of an upper side of the opening in the drum 30 in conformity with the shape of a stream line of the gap.

The washing machine of the present invention improves an esthetic appreciation of the washing machine as exposure between the tub and the drum caused by sagging of the front of the drum in a state the drum holds the laundry to the maximum is blocked.

It will be apparent to those skilled in the art that various modifications and variations can be made in the present invention without departing from the scope of the invention. Thus, it is intended that the present invention cover the modifications and variations of this invention provided they come within the scope of the appended claims and their equivalents.

## Claims

1. A washing machine comprising:
a tub (20) for accommodating washing water, the tub having a laundry opening (22) for introduction of laundry;
a drum (30) rotatably coupled in the tub (20) for receiving the laundry, the drum (30) having an opening matched to the laundry opening (22); and
a gasket (80) having a blocking portion (83) for blocking a portion of the laundry opening (22) of the tub (20), asymmetrically,
**characterized in that**
the blocking portion (82) is formed to block a portion of an upper side of the laundry opening (22) of the tub (20) and has the shape of a stream line along an inside circumferential surface of the opening in the drum (30) such that the blocking portion (82) covers the gap between the top of the laundry opening (22) of the tub (20) and the top of the drum (30) when the drum (30) holds the laundry and the washing water to the maximum.

2. The washing machine as claimed in claim 1, wherein the blocking portion (82) blocks the laundry opening (22) asymmetrically in up/down directions.

3. The washing machine as claimed in claim 1, wherein the blocking portion is formed to make an upper most side of the opening in the drum not visible from a front side of the tub.

4. The washing machine as claimed in claim 1, wherein the gasket (80) includes a door sealing portion for sealing a door (12) which opens/closes the laundry opening (22) in the tub (20), and the blocking portion (82) is formed extended further from the door sealing portion inwardly in a radial direction.

5. The washing machine as claimed in claim 1, wherein the gasket (80) includes a first fastening portion for placing a circumferential surface projected forward from a front of the tub (20) therein, and a second fastening portion to be fastened to an inside surface of the tub (20).

6. The washing machine as claimed in claim 5, wherein the second fastening portion includes a tub fastening portion (84) having a plurality of grooves for placing projections or hooks formed on an inside surface of the tub (20) therein.

7. The washing machine as claimed in claim 1, further comprising a driving unit having a rotation shaft connected to the drum, a bearing housing for supporting the rotation shaft, and a motor for rotating the rotation shaft; and
a suspension unit connected to the bearing housing for damping vibration of the drum.

8. The washing machine as claimed in claim 1, further comprising a driving unit having a rotation shaft connected to the drum, a bearing housing for supporting the rotation shaft, and a motor for rotating the rotation shaft; and
a rear gasket for sealing a rear side of the tub (20) to prevent water from leaking from the tub (20) to the driving unit and enabling the driving unit to make movement relative to the tub (20).

9. The washing machine as claimed in claim 1, further comprising a cabinet (10) forming an exterior of the washing machine and a suspension unit for supporting and damping the drum, wherein the tub (20) is directly fixed to an inside of the cabinet (10) such that the tub (20) is supported rigidly more than the drum (30) is supported by the suspension unit (60).

## Patentansprüche

1. Waschmaschine, die Folgendes umfasst:
einen Bottich (20) zum Aufnehmen von Waschwasser, wobei der Bottich eine Wäscheöffnung (22) zum Einlegen von Wäsche aufweist;
eine Trommel (30), die in dem Bottich (20) drehbar gekoppelt ist, um die Wäsche aufzunehmen, wobei die Trommel (30) eine Öffnung aufweist, die zu der Wäscheöffnung (22) passt; und
eine Dichtung (80), die einen Blockierabschnitt (83) zum asymmetrischen Blockieren eines Abschnitts der Wäscheöffnung (22) des Bottichs (20) aufweist,
**dadurch gekennzeichnet, dass**
der Blockierabschnitt (82) gebildet ist, um einen Abschnitt einer oberen Seite der Wäscheöffnung (22) des Bottichs (20) zu blockieren, und die Form einer Stromlinie entlang einer Innenumfangsfläche der Öffnung in der Trommel (30) hat, so dass der Blockierabschnitt (82) den Spalt zwischen der Oberseite der Wäscheöffnung (22) des Bottichs (20) und der Oberseite der Trommel (30) blockiert, wenn die Trommel (30) die maximale Menge an Wäsche und Waschwasser enthält.

2. Waschmaschine nach Anspruch 1, wobei der Blockierabschnitt (82) die Wäscheöffnung (22) in der Aufwärts- bzw. Abwärtsrichtung asymmetrisch blockiert.

3. Waschmaschine nach Anspruch 1, wobei der Blockierabschnitt so gebildet ist, dass eine oberste Seite der Öffnung in der Trommel von einer Vorderseite des Bottichs aus nicht sichtbar ist.

4. Waschmaschine nach Anspruch 1, wobei die Dichtung (80) einen Türdichtungsabschnitt zum Abdichten einer Tür (12), die die Wäscheöffnung (22) in dem Bottich (20) öffnet bzw. schließt, umfasst und wobei der Blockierabschnitt (82) so gebildet ist, dass er sich von dem Türdichtungsabschnitt in einer radialen Richtung weiter nach innen erstreckt.

5. Waschmaschine nach Anspruch 1, wobei die Dichtung (80) einen ersten Befestigungsabschnitt zum Anordnen einer Umfangsfläche, die von einer Vorderseite des Bottichs (20) nach vom vorsteht, und einen zweiten Befestigungsabschnitt zum Befestigen an einer inneren Oberfläche des Bottichs (20) umfasst.

6. Waschmaschine nach Anspruch 5, wobei der zweite Befestigungsabschnitt einen Bottich-Befestigungsabschnitt (84) umfasst, der mehrere Rillen zum Anordnen von Vorsprüngen oder Haken, die an einer inneren Oberfläche des Bottichs (20) ausgebildet sind, aufweist.

7. Waschmaschine nach Anspruch 1, die ferner Folgendes umfasst: eine Antriebseinheit, die eine mit der Trommel verbundene drehbare Welle, ein Lagergehäuse zum Halten der drehbaren Welle und einen Motor zum Drehen der drehbaren Welle aufweist; und
eine Aufhängungseinheit, die mit dem Lagergehäuse zum Dämpfen einer Schwingung der Trommel verbunden ist.

8. Waschmaschine nach Anspruch 1, die ferner Folgendes umfasst: eine Antriebseinheit, die eine mit der Trommel verbundene drehbare Welle, ein Lagergehäuse zum Halten der drehbaren Welle und einen Motor zum Drehen der drehbaren Welle aufweist; und
eine hintere Dichtung zum Abdichten einer Rückseite des Bottichs (20), damit kein Wasser aus dem Bottich (20) zu der Antriebseinheit auslaufen kann und damit die Antriebseinheit in Bezug auf den Bottich (20) eine Bewegung ausführen kann.

9. Waschmaschine nach Anspruch 1, die ferner ein Gehäuse (10), das ein Äußeres der Waschmaschine bildet, und eine Aufhängungseinheit zum Halten und Dämpfen der Trommel umfasst, wobei der Bottich (20) an einer Innenseite des Gehäuses (10) direkt so befestigt ist, dass der Bottich (20) im Vergleich dazu, wie die Trommel (30) durch die Aufhängungseinheit (60) gehalten wird, starrer gehalten wird.

## Revendications

1. Machine à laver comprenant :
une cuve (20) pour recevoir de l'eau de lavage, la cuve ayant une ouverture à linge (22) pour l'introduction du linge ;
un tambour (30) couplé en rotation dans la cuve (20) pour recevoir le linge, le tambour (30) ayant une ouverture appariée à l'ouverture à linge (22) ; et
un joint (80) ayant une portion de blocage (83) pour bloquer une portion de l'ouverture à linge (22) de la cuve (20), de manière asymétrique,
**caractérisée en ce que**
la portion de blocage (82) est formée pour bloquer une portion d'un côté supérieur de l'ouverture à linge (22) de la cuve (20) et a la forme d'une ligne aérodynamique le long d'une surface circonférentielle intérieure de l'ouverture dans le tambour (30) de sorte que la portion de blocage (82) couvre l'intervalle entre le sommet de l'ouverture à linge (22) de la cuve (20) et le sommet du tambour (30) quand le tambour (30) contient le linge et l'eau de lavage au maximum.

2. Machine à laver selon la revendication 1, dans laquelle la portion de blocage (82) bloque l'ouverture à linge (22) de manière asymétrique dans les directions montante/descendante.

3. Machine à laver selon la revendication 1, dans laquelle la portion de blocage est formée de manière à ce qu'un côté tout à fait supérieur de l'ouverture dans le tambour ne soit pas visible depuis un côté avant de la cuve.

4. Machine à laver selon la revendication 1, dans laquelle le joint (80) inclut une portion d'étanchement de porte pour étancher une porte (12) qui ouvre/ferme l'ouverture à linge (22) dans la cuve (20), et la portion de blocage (82) est formée de manière à s'étendre depuis la portion d'étanchement de porte plus loin vers l'intérieur dans une direction radiale.

5. Machine à laver selon la revendication 1, dans laquelle le joint (80) inclut une première portion de fixation pour placer à l'intérieur une surface circonférentielle qui se projette vers l'avant depuis une partie avant de la cuve (20), et une seconde portion de fixation à fixer sur une surface intérieure de la cuve (20).

6. Machine à laver selon la revendication 5, dans laquelle la seconde portion de fixation inclut une portion de fixation de cuve (84) ayant une pluralité de gorges pour placer des projections ou des crochets formés sur une surface intérieure de la cuve (20) à l'intérieur.

7. Machine à laver selon la revendication 1, comprenant en outre une unité d'entraînement ayant un arbre rotatif connecté au tambour, un boîtier de palier pour supporter l'arbre rotatif, et un moteur pour mettre en rotation l'arbre rotatif ; et
une unité de suspension connectée au boîtier de palier pour amortir les vibrations du tambour.

8. Machine à laver selon la revendication 1, comprenant en outre une unité d'entraînement ayant un arbre rotatif connecté au tambour, un boîtier de palier pour supporter l'arbre rotatif, et un moteur pour mettre en rotation l'arbre rotatif ; et
un joint arrière pour étancher un côté arrière de la cuve (20) et empêcher à l'eau de fuir hors de la cuve (20) vers l'unité d'entraînement et permettre à l'unité d'entraînement d'effectuer des mouvements par rapport à la cuve (20).

9. Machine à laver selon la revendication 1, comprenant en outre une carrosserie (10) formant un extérieur de la machine à laver et une unité de suspension pour supporter et amortir le tambour, dans laquelle la cuve (20) est directement fixée sur un intérieur du de la carrosserie (10) de telle façon que la cuve (20) est supportée plus rigidement que le tambour (30) est supporté par l'unité de suspension (60).
